# EUROPÄISCHE PATENTSCHRIFT

(11) **EP 1 794 476 B1**
(45) Veröffentlichungstag und Bekanntmachung des Hinweises auf die Patenterteilung: **17.06.2009**
(21) Anmeldenummer: 05808188.6
(22) Anmeldetag: 18.11.2005
(51) Int. Cl.: F16H 41/30, F16D 33/16

(54) **HYRDODYNAMISCHE KUPPLUNG**
HYDRODYNAMIC CLUTCH
EMBRAYAGE HYDRODYNAMIQUE

(30) Priorität: 10.12.2004 DE 102004059836
(43) Veröffentlichungstag der Anmeldung: 13.06.2007
(73) Patentinhaber: Voith Turbo GmbH & Co. KG, 89522 Heidenheim (DE)
(72) Erfinder: PITTIUS, Reinhold, 74564 Crailsheim (DE); KLEY, Markus, 73479 Ellwangen (DE)
(74) Vertreter: Dr. Weitzel & Partner
(86) Internationale Anmeldenummer: PCT/EP2005/012341
(87) Internationale Veröffentlichungsnummer: WO 2006/061092

(56) Entgegenhaltungen:
- DE-A1- 3 240 179
- DE-A1- 10 231 028
- DE-A1- 19 752 187
- US-A- 2 240 650

## Beschreibung

Die Erfindung betrifft eine hydrodynamische Kupplung, die zwischen eine Antriebsmaschine und eine Arbeitsmaschine geschaltet werden kann, und insbesondere eine Baugruppe mit einem Antriebsmotor eines Fahrzeugs, einem durch den Antriebsmotor antreibbaren Luftverdichter und einer in die Triebverbindung zwischen dem Antriebsmotor und dem Luftverdichter angeordneten hydrodynamischen Kupplung.

Hydrodynamische Kupplungen sind in einer Vielzahl von Ausführungen für unterschiedliche Verwendungszwecke bekannt. Ein möglicher Einsatzbereich für solche hydrodynamischen Kupplungen ist die Übertragung von Drehmoment beziehungsweise allgemein Antriebsleistung von einem Antriebsmotor eines Fahrzeugs auf einen Luftverdichter, wobei der letztere die Druckluftanlage des Fahrzeugs mit Druckluft versorgt. Der Vorteil der Anordnung einer hydrodynamischen Kupplung in einem solchen Antriebsstrang ist eine Schwingungsdämpfung zwischen dem Antriebsmotor beziehungsweise einem dem Antriebsmotor nachgeschalteten Getriebe und dem Luftverdichter, was bekanntermaßen auf die natürliche Eigenschaft einer hydrodynamischen Kupplung zurückzuführen ist. So wird beispielsweise vermieden, dass beim Antrieb eines Hubkolben-Luftverdichters im Bereich des oberen Totpunktes des Kolbens ein negatives Drehmoment von dem Verdichter auf das Getriebe zurückübertragen wird, was zu einem Zähneklappern und übermäßigem Verschleiß im Getriebe führen kann.

Als Beispiel für eine Anordnung einer hydrodynamischen Kupplung zwischen einer Antriebsmaschine, hier einem Dieselmotor, und einem Luftverdichter, hier einem Radialluftverdichter, wird auf die Offenlegungsschrift DE 32 33 567 A1 verwiesen.

In vielen Ausführungen weisen hydrodynamische Kupplungen ein Gehäuse auf, welches teilweise durch das Pumpenrad ausgebildet wird, so dass das Gehäuse im Betrieb der hydrodynamischen Kupplung mit der Drehgeschwindigkeit der Eingangswelle umläuft. Dabei umschließt das Pumpenrad in der Regel zusammen mit einem an ihm angeschlossenen Gehäuseteil das Turbinenrad. Pumpenrad und Turbinenrad stehen sich dabei derart gegenüber, dass sie einen gemeinsamen Arbeitsraum ausbilden, der mit einem Arbeitsmedium, beispielsweise Öl, Wasser oder ein Gemisch mit einem oder beiden dieser Stoffe, befüllbar ist, so dass vom Pumpenrad über das Arbeitsmedium auf das Turbinenrad ein Drehmoment beziehungsweise allgemein Drehleistung übertragen wird.

Aufgrund dessen, dass sich das Gehäuse einer solchen hydrodynamischen Kupplung dreht, ist der Anschluss einer arbeitsmediumabführenden Leitung, durch welche das Arbeitsmedium aus dem Arbeitsraum "sauber" abgeführt wird, aufwendig, da entsprechende Drehverbindungen erforderlich sind. Daher werden solche hydrodynamische Kupplungen in der Praxis in der Regel derart ausgeführt, dass das Gehäuse eine oder eine Vielzahl von Auslassöffnungen aufweist, aus welchen das Arbeitsmedium, welches aus dem Arbeitsraum heraus ausgetreten ist, herausspritzt. Dieses herausspritzende Arbeitsmedium wird aufgefangen, beispielsweise durch eine Auffangwanne unterhalb des Kupplungsgehäuses, und über entsprechende Öffnungen oder Leitungen aus dieser Auffangwanne abgeführt.

Aus dem Dokument US 2 240 650 ist eine gattungsgemaße kupplung bekannt.

Um zu verhindern, dass eine Bremswirkung auf die hydrodynamische Kupplung ausgeübt wird, was zu einer Wirkungsgradverschlechterung des Antriebssystems führt, wird die Auffangwanne derart ausgeführt, dass sich im wesentlichen kein Ölsumpf beziehungsweise allgemein keine Arbeitsmediumansammlung ausbilden kann, welcher in einen Kontakt mit dem Kupplungsgehäuse geraten könnte. Dies kann man entweder dadurch erreichen, dass die Auffangwanne mit einem ausreichenden Abstand gegenüber dem Kupplungsgehäuse angeordnet wird, oder entsprechende Ablaufmöglichkeiten in der Auffangwanne geschaffen werden, welche ein Ansammeln von Arbeitsmedium in dieser vermeiden.

Ferner ist es bekannt, dass bei hydrodynamischen Kupplungen aufgrund des Schlupfes zwischen dem Pumpenrad und dem Turbinenrad das Arbeitsmedium im Betrieb durch Flüssigkeitsreibung aufgeheizt wird. Der größte Teil dieser Wärme wird über den Arbeitsmediumdurchfluss abgeführt. Der Durchfluss von Arbeitsmedium ist jedoch von dem Druck in der Zuleitung abhängig. Bei niedrigen Drehzahlen des Pumpenrads und damit auch des Turbinenrads steht nur ein geringer Zufuhrdruck zur Verfügung. Gleichzeitig gibt es einen großen Schlupf zwischen dem Pumpenrad und dem Turbinenrad und eine entsprechend große Aufheizleistung.

Diese ungünstige Kombination von niedrigem Durchsatz durch die hydrodynamische Kupplung bei gleichzeitig großer Flüssigkeitsreibung im Arbeitsraum kann zu einer unzulässigen Temperaturerhöhung in der hydrodynamischen Kupplung führen.

Insbesondere bei dem Einsatz einer hydrodynamischen Kupplung in der Triebverbindung zwischen einem Antriebsmotor, insbesondere Fahrzeugantriebsmotor, und einem Luftverdichter tritt zudem das Problem auf, dass bei einer entleerten oder weitgehend entleerten hydrodynamischen Kupplung diese durch das Kompressorsystem zu Schwingungen angeregt wird, welche unerwünscht sind, da sie Vibrationen und Geräusche erzeugen.

Der Erfindung liegt die Aufgabe zugrunde, eine hydrodynamische Kupplung derart zu gestalten beziehungsweise eine Baugruppe mit einer solchen hydrodynamischen Kupplung anzugeben, welche eine unzulässige Aufheizung der hydrodynamischen Kupplung in allen Betriebszuständen sicher vermeidet. Ferner soll ein Verfahren zum sicheren Betreiben einer hydrodynamischen Kupplung mit einer in allen Betriebszuständen zuverlässigen Wärmeabfuhr aus der hydrodynamischen Kupplung angegeben werden. Gemäß einer Ausführung der Erfindung sollen zugleich unerwünschte Schwingungen, wie sie oben beschrieben worden sind, vermieden werden.

Die erfindungsgemäße Aufgabe wird durch eine hydrodynamische Kupplung mit den Merkmalen von Anspruch 1 beziehungsweise eine Baugruppe gemäß Anspruch 7 sowie ein Verfahren, wie es in Anspruch 10 beschrieben ist, gelöst. Die Unteransprüche beschreiben vorteilhafte und zweckmäßige Ausgestaltungen der Erfindung.

Gemäß der Erfindung wird ein Teil der im Arbeitsraum der Kupplung erzeugten Wärme über die äußere Oberfläche des Kupplungsgehäuses durch Flüssigkeitskühlung abgeführt. Dies wird dadurch erreicht, dass das Gehäuse der hydrodynamischen Kupplung derart in eine Auffangwanne unterhalb des Gehäuses zum Auffangen von aus in dem Gehäuse vorgesehenen Auslassöffnungen austretendem Arbeitsmedium eingetaucht ist, dass sich zumindest in vorbestimmten Betriebszuständen, vorteilhaft in Betriebszuständen mit hohem Schlupf zwischen dem Pumpenrad und dem Turbinenrad, wenigstens der untere Bereich des Gehäuses im Arbeitsmediumbad oder im Arbeitsmediumsumpf befindet, dass/der sich in der Auffangwanne angesammelt hat.

Insbesondere bei einem Gehäuse, welches an das Pumpenrad angeschlossen ist beziehungsweise bei solchen Ausführungen der hydrodynamischen Kupplung, in denen das Pumpenrad einen Teil des Gehäuses ausbildet und somit das Gehäuse umläuft, durchtritt vorteilhaft die gesamte äußere Umfangsfläche des Gehäuses das Arbeitsmediumbad beziehungsweise den Arbeitsmediumsumpf, insbesondere den Ölsumpf, wenn Öl als Arbeitsmedium verwendet wird. Somit findet eine Flüssigkeitskühlung der äußeren Oberfläche des Kupplungsgehäuses statt, wobei durch die Drehbewegung der Oberfläche des Kupplungsgehäuses durch das Arbeitsmediumbad hindurch im Vergleich zu einem stationären Eintauchen des Gehäuses der Wärmeübergang von der Oberfläche auf das Arbeitsmediumbad vergrößert wird.

Das Eintauchen des Gehäuses der hydrodynamischen Kupplung bewirkt zudem eine Schwingungsdämpfung, welche besonders einfach und zuverlässig das Auftreten von Schwingungen, beispielsweise bei entleerter oder weitgehend entleerter hydrodynamischen Kupplung, vollständig oder im wesentlichen vermeidet.

Gemäß einer vorteilhaften Ausführung der Erfindung ist das Gehäuse nicht stets, sondern nur in vorgegebenen Betriebszuständen in den Arbeitsmediumsumpf beziehungsweise das Arbeitsmediumbad eingetaucht. Diese ausgewählten Betriebszustände sind vorteilhaft solche Betriebszustände, in welchen der Schlupf zwischen dem Pumpenrad und dem Turbinenrad groß ist, beispielsweise über 50 Prozent beträgt, das heißt das Pumpenrad läuft mit mehr als der zweifachen Geschwindigkeit des Turbinenrades um, wobei solche Schlupfzustände in der Regel bei niedrigen Drehzahlen der Kupplung auftreten. Selbstverständlich können auch andere Grenzwerte für den Schlupf ausgewählt werden, oberhalb dessen eine Eintauchung des Gehäuses in den Arbeitsmediumsumpf, insbesondere den Ölsumpf, in der Auffangwanne vorgesehen wird. Beispielsweise seien 60, 70, 80 oder 90 Prozent genannt.

Durch das Eintauchen des Kupplungsgehäuses in das in der Auffangwanne angesammelte Arbeitsmedium bei niedrigen Drehgeschwindigkeiten des Gehäuses erfolgt die erfindungsgemäße Flüssigkeitskühlung in den Betriebszuständen, in welchen die Wärmeerzeugung im Arbeitsraum groß und die Wärmeabfuhr durch den Arbeitsmediumdurchsatz durch die Kupplung klein ist. Gleichzeitig wird ein Eintauchen bei hohen Drehgeschwindigkeiten des Gehäuses, bei welchen die Wärmeerzeugung in der Kupplung vergleichsweise klein und die Wärmeabfuhr durch den Arbeitsmediumdurchsatz groß ist, vermieden, so dass keine den Antriebswirkungsgrad verschlechternde Abbremsung des Gehäuses und damit der Kupplung, insbesondere des Pumpenrads, erfolgt.

Das Ansammeln und teilweise oder vollständige Entfernen eines Arbeitsmediumsumpfes in der Auffangwanne kann durch verschiedene konstruktive Ausgestaltungen gewährleistet werden. Gemäß einer ersten Ausführung weist die Auffangwanne wenigstens eine Ablauföffnung mit einer Ablaufkante auf, die mit einem vorbestimmten Abstand oberhalb des Bodens der Auffangwanne angeordnet ist. Somit wird einerseits die maximale Höhe des Arbeitsmediumsumpfes in der Auffangwanne begrenzt. Andererseits können zusätzliche Maßnahmen getroffen werden, um in vorbestimmten Betriebszuständen ein Entleeren der Auffangwanne auf ein Niveau unterhalb der Ablauföffnung beziehungsweise der Ablaufkante zu bewirken.

Gemäß einer ersten Maßnahme weist das Gehäuse der hydrodynamischen Kupplung auf seiner Außenseite eine Beschaufelung auf, welche in dem in der Auffangwanne angesammelten Arbeitsmedium "planscht". Mit zunehmender Drehzahl des Kupplungsgehäuses wird diese "Verplanschung" stärker und führt zu einem Herausschwappen des Arbeitsmediums durch die Auslassöffnungen aus der Auffangwanne heraus. Somit sinkt das Niveau des Arbeitsmediumspiegels in der Auffangwanne ab, wenn mehr Arbeitsmedium aus der Auffangwanne abgeführt wird, als über die hydrodynamische Kupplung zugeführt wird. Insbesondere sinkt das Niveau oberhalb einer vorgegebenen Drehzahl derart stark ab, dass das Gehäuse der hydrodynamischen Kupplung nicht länger in Arbeitsmedium in der Auffangwanne eingetaucht ist. Bei hohen Drehzahlen kann auch eine Vernebelung des Arbeitsmediumsumpfes durch die Beschaufelung auf der Gehäuseaußenseite bewirkt werden, wobei dieser Nebel dann aus der Auffangwanne abzieht beziehungsweise abgezogen wird.

Gemäß einer zweiten Maßnahme können zusätzliche Öffnungen unterhalb der wenigstens einen Ablauföffnung mit der Ablaufkante vorgesehen sein, die gezielt geöffnet werden, nachdem sie zuvor abgesperrt waren. Somit kann Arbeitsmedium aus der Auffangwanne entweichen. Das Öffnen kann beispielsweise oberhalb einer vorgegebenen Drehzahl der hydrodynamischen Kupplung, das heißt des Pumpenrads, des Turbinenrads und/oder des Gehäuses und/oder unterhalb eines vorgegebenen Schlupfes, beispielsweise von 50 Prozent oder weniger, erfolgen.

Gemäß einer dritten Maßnahme wird das Arbeitsmedium in vorgegebenen Betriebszuständen, beispielsweise den Betriebszuständen, welche im Zusammenhang mit der zweiten Maßnahme beschrieben wurden, aus der Auffangwanne mittels einer Pumpe herausgepumpt.

Alle drei Maßnahmen können einzeln, gruppenweise oder in Kombination ausgeführt werden.

Alle Ausführungsformen der erfindungsgemäßen hydrodynamischen Kupplung weisen ein Pumpenrad und ein Turbinenrad auf, wobei das Pumpenrad und das Turbinenrad miteinander einen Arbeitsraum ausbilden, der mit Arbeitsmedium zum Übertragen eines Drehmomentes vom Pumpenrad auf das Turbinenrad befüllbar ist. Das Arbeitsmedium kann Öl, Wasser oder ein Gemisch dieser beiden Stoffe und eines weiteren Stoffes mit einem oder beiden dieser Stoffe sein. Ferner ist ein Gehäuse vorgesehen, das eine oder mehrere Auslassöffnungen zum Abführen von Arbeitsmedium aus dem Arbeitsraum aufweist, wobei das Arbeitsmedium über die Auslassöffnung(en) aus dem Gehäuse heraus befördert beziehungsweise gespritzt wird.

Unterhalb des Gehäuses ist eine Auffangwanne zum Auffangen von aus der Auslassöffnung beziehungsweise den Auslassöffnungen austretendem Arbeitsmedium vorgesehen. Unterhalb im Sinne der Erfindung bedeutet dabei, dass sich der Boden der Auffangwanne mit einem vorgegebenen Abstand unterhalb der Unterkante des Gehäuses befindet. Das Gehäuse ist in die Auffangwanne eingetaucht, so dass es bei dem Ansammeln von Arbeitsmedium in der Auffangwanne in das Arbeitsmedium hineinragt.

Gemäß der ersten Ausführungsform der Erfindung weist die Auffangwanne wenigstens eine Ablauföffnung mit einer Ablaufkante auf, die mit einem vorbestimmten Abstand oberhalb des Bodens der Auffangwanne angeordnet ist. Somit beginnt Arbeitsmedium aus der Auffangwanne durch diese Auslassöffnung herauszulaufen, wenn der Arbeitsmediumspiegel die Höhe der Ablaufkante erreicht hat.

Damit der Pegel des Arbeitsmediums in der Auffangwanne soweit ansteigen kann, dass zumindest der untere Bereich des Kupplungsgehäuses in dieses in der Auffangwanne gesammelte Arbeitsmedium eintaucht, ist die Ablaufkante an einem geodätisch höheren Ort als die Unterkante des Kupplungsgehäuses angeordnet.

Gemäß einer besonderen Ausgestaltung ist die Auffangwanne unterhalb der Ablaufkante frei von jeglichen arbeitsmediumabführenden Öffnungen, so dass das Ausbilden einer Arbeitsmediumansammlung in den gewünschten Betriebszuständen gewährleistet wird.

Wenn das Gehäuse auf seiner Außenseite eine Beschaufelung trägt und mit der Drehgeschwindigkeit des Pumpenrades, des Turbinenrades oder einer anderen vorgegebenen Geschwindigkeit umläuft, wird diese Beschaufelung oberhalb einer vorgegebenen Drehzahl mehr Arbeitsmedium aus der Auffangwanne durch die Ablauföffnung beziehungsweise Ablauföffnungen herausschaufeln, als über die hydrodynamische Kupplung zugeführt wird, so dass der Pegel des Arbeitsmediums in der Auffangwanne absinkt. Bei einer niedrigen Drehzahl des Kupplungsgehäuses hingegen können die Schaufeln auf der Außenseite keine ausreichende Schaufelwirkung erreichen, so dass sich das Arbeitsmedium in der Auffangwanne bis zu der Ablaufkante oder nahezu bis zu der Ablaufkante ansammelt und eine entsprechend große Kühlwirkung auf die Außenseite des Gehäuses ausübt.

Die erfindungsgemäße hydrodynamische Kupplung, welche die dargestellte Auffangwanne mit oder ohne vorgegebener Ablaufkante in Ablauföffnungen umfasst, kann besonders vorteilhaft in den Antriebsstrang zwischen einem Antriebsmotor eines Fahrzeugs und einem von dem Antriebsmotor angetriebenen Luftverdichter eingebracht werden. Das Vorsehen einer hydrodynamischen Kupplung ermöglicht das gezielte Ein- und Ausschalten des Luftverdichters, wobei zugleich die Übertragung eines Drehmomentes von dem Verdichter auf beispielsweise ein an dem Antriebsmotor angeflanschtes Getriebe, dessen Abtriebswelle in Wirkverbindung mit der Pumpenradwelle der Kupplung steht, vermieden wird. Der Antriebsmotor ist insbesondere als Brennkraftmaschine ausgebildet, und der Luftverdichter ist insbesondere ein Hubkolben-Luftverdichter.

Eine Baugruppe, in welcher die hydrodynamische Kupplung gemäß der Erfindung, der Antriebsmotor des Fahrzeugs und der Luftverdichter angeordnet ist, weist vorteilhaft eine derartige Konstruktion auf, dass die hydrodynamische Kupplung an dem Fahrzeugmotor angeflanscht beziehungsweise angeschlossen oder zumindest teilweise integral mit diesem ausgebildet ist. Die Ablaufkante der Ablauföffnung(en) der Auffangwanne kann dabei im Motor ausgebildet sein. Besonders vorteilhaft wird das Arbeitsmedium, welches in diesem Fall Öl ist, aus der Auffangwanne über die Ablaufkante in den Motor befördert beziehungsweise strömt in den Motor, wenn der Ölpegel in der Auffangwanne das Niveau der Ablaufkante überschreitet beziehungsweise die Schaufelwirkung der Außenbeschaufelung des Gehäuses ausreichend groß ist.

Die Erfindung soll nachfolgend anhand eines Ausführungsbeispiels näher beschrieben werden.

Es zeigen:
- Figur 1: eine seitliche Draufsicht auf eine erfindungsgemäß ausgeführte hydrodynamische Kupplung;
- Figur 2: einen Axialschnitt entlang der Linie A - A in der Figur 1.

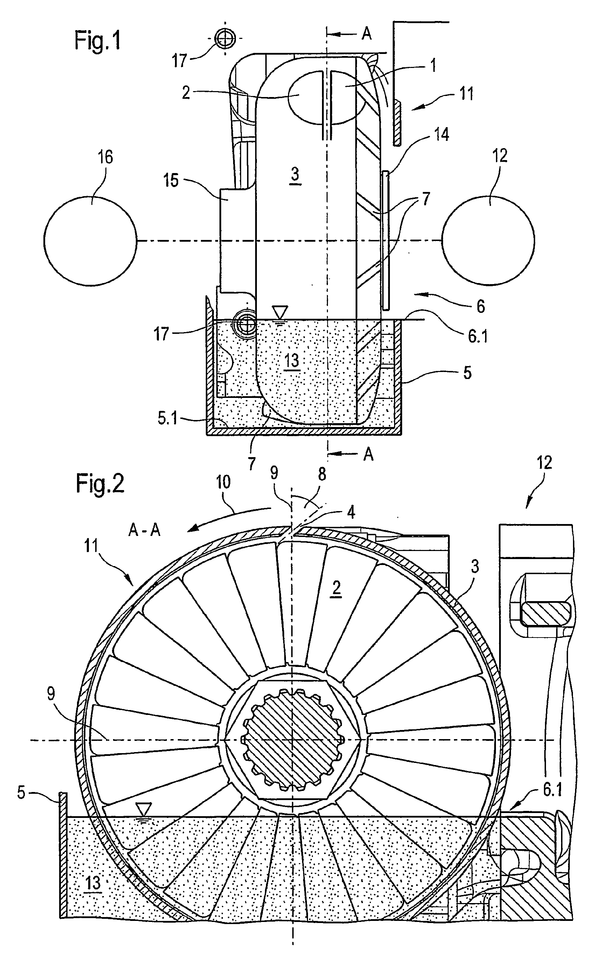

In der Figur 1 erkennt man die hydrodynamische Kupplung 11, und zwar insbesondere die äußere Oberfläche des Gehäuses 3 sowie ansatzweise die Kupplungseingangswelle 14 und die Kupplungsausgangswelle 15. Ferner ist sehr schematisch die Auffangwanne 5 dargestellt, welche eine Ablaufkante 6.1 in einer Ablauföffnung 6 aufweist. Unter Ablauföffnung ist dabei der freie Raum oberhalb der Ablaufkante 6.1 zu verstehen, durch welchen Arbeitsmedium aus dem Arbeitsmediumsumpf 13 herausfließt, wenn der Flüssigkeitsspiegel des in der Auffangwanne 5 gesammelten Arbeitsmediums, wie dargestellt, das geodätische Niveau der Ablaufkante 6.1 erreicht und übersteigt. Zudem kann oberhalb einer vorgegebenen Drehzahl des Gehäuses 3 Arbeitsmedium aus dem Arbeitsmediumsumpf 13 durch die Beschaufelung 7 außen auf dem Gehäuse 3 mitgerissen werden und aus der Ölwanne 5 heraustransportiert werden, beispielsweise in Form von Öldunst, zu welchem das Arbeitsmedium Öl durch die Beschaufelung 7 verwirbelt wird, der dann durch die Auslassöffnung 6 abzieht beziehungsweise aktiv abgezogen wird.

Alternativ kann die Auffangwanne 5 an ihrer Innenseite mit Auffangvorrichtungen, beispielsweise in Form von Rinnen (nicht dargestellt) versehen sein, welche Arbeitsmedium, das durch die Beschaufelung 7 an die Innenwand oberhalb des Arbeitsmediumpegels der Auffangwanne 5 geschleudert wird, aufgefangen und aus der Auffangwanne 5 herausgeleitet wird.

Die Auffangwanne 5 weist einen Boden 5.1 auf, auf welchem das Arbeitsmedium beginnt sich anzusammeln, nachdem es aus der Kupplung 11 ausgetreten ist.

Wie sehr schematisch in der Figur 1 dargestellt ist, steht die Kupplungseingangswelle 14 in einer Triebverbindung mit einem Fahrzeugantriebsmotor 12, und die Kupplungsausgangswelle 15 steht in einer Triebverbindung mit einem Luftverdichter 16, welcher insbesondere als Hubkolben-Luftverdichter ausgebildet ist.

Von dem Fahrzeugantriebsmotor 12 wird Drehmoment über die Kupplungseingangswelle 14 auf das Pumpenrad 1 übertragen, welches integral mit dem Gehäuse 3 ausgebildet ist. Durch Befüllen des torusförmigen Arbeitsraumes, welcher durch das Pumpenrad 1 und ein innerhalb des Gehäuses angeordnetes und dem Pumpenrad 1 gegenüberstehendes Turbinenrad 2 ausgebildet wird, wird Drehmoment beziehungsweise Antriebsleistung von dem Pumpenrad 1 auf das Turbinenrad 2 und über die Kupplungsausgangswelle 15, die drehstarr an dem Turbinenrad 2 angeschlossen ist oder integral mit diesem ausgebildet ist, auf den Verdichter 16 übertragen.

Obwohl die Auffangwanne insbesondere in der Figur 1 schematisch in der Form einer als einzelnes Bauteil ausgeführten Wanne dargestellt ist, kann diese Auffangwanne 5 durch benachbart zu der hydrodynamischen Kupplung 11 angeordnete Bauteile weiterer Komponenten beispielsweise des Fahrzeugantriebstranges ausgebildet werden. Insbesondere wird, wie in der Figur 2 dargestellt ist, die Ablaufkante 6.1 durch ein Bauteil des Fahrzeugantriebsmotors 12 ausgebildet.

In der Figur 2, in welcher ein Axialschnitt durch die hydrodynamische Kupplung 11 zwischen dem Pumpenrad 1 und dem Turbinenrad 2 dargestellt ist, so dass man das Turbinenrad 2 in einer stirnseitigen Draufsicht erkennt, erkennt man zudem beispielhaft eine der Vielzahl von Auslassöffnungen 4, welche durch die Außenwandung des Gehäuses 3 hindurch eingebracht sind. Die Auslassöffnung 4, welche exemplarisch beispielsweise für eine Vielzahl von über dem gesamten Umfang des Gehäuses 3 angeordneten Auslassöffnungen steht, ist mit einem vorgegebenen Winkel 8 gegenüber der Radialrichtung 9 des Gehäuses 3 geneigt. Die Neigung ist dabei derart ausgeführt, dass sie entgegengesetzt der Drehrichtung des Gehäuses 3, welche durch den Pfeil 10 dargestellt ist, gerichtet ist, wenn man den Verlauf der Auslassöffnung 4 radial von innen nach außen betrachtet. Diese gezeigte geneigte Ausrichtung gegenüber der Radialrichtung 9 hat den Vorteil, dass einerseits eine vollkommene Entleerung der hydrodynamischen Kupplung 11 möglich ist, und andererseits beim Entleeren der hydrodynamischen Kupplung 11 durch die Auslassöffnungen 4 ein Rückstoßeffekt erzeugt wird, welcher eine Antriebskraft im Sinne der Drehrichtung 10 auf die hydrodynamische Kupplung 11, das heißt zumindest auf das Gehäuse 3 und gegebenenfalls das Pumpenrad 1 der hydrodynamischen Kupplung 11, in der Art eines Strahlantriebs ausübt.

In der Figur 2 kann man zudem erkennen, dass die hydrodynamische Kupplung 11 an dem Motor 12 angeflanscht ist. Da der Motor 12 jedoch in der Radialrichtung 9 der hydrodynamischen Kupplung 11 betrachtet, das heißt in Richtung des in der Figur 2 dargestellten Axialschnittes, eine größere Breite und auch Höhe aufweist als die hydrodynamische Kupplung, erkennt man Teile des Motors 12 rechts und oberhalb von der hydrodynamischen Kupplung 11. In der Figur 1 erkennt man zudem die Stellen 17, an welchen die hydrodynamische Kupplung 11 seitlich am Motor 12 angeflanscht ist.

## Patentansprüche

1. Hydrodynamische Kupplung,
1.1 mit einem Pumpenrad (1);
1.2 mit einem Turbinenrad (2);
1.3 das Pumpenrad (1) und das Turbinenrad (2) bilden miteinander einen Arbeitsraum aus, der mit Arbeitsmedium zum Übertragen von Drehmoment von dem Pumpenrad (1) auf das Turbinenrad (2) befüllbar ist;
1.4 mit einem Gehäuse (3), das eine oder mehrere Auslassöffnungen (4) zum Abführen von Arbeitsmedium aus dem Arbeitsraum und dem Gehäuse (3) heraus aufweist;
**gekennzeichnet durch** die folgenden Merkmale:
1.5 es ist eine Auffangwanne (5) unterhalb des Gehäuses (3) zum Auffangen von aus den Auslassöffnungen (4) austretendem Arbeitsmedium vorgesehen, in welche das Gehäuse (3) eingetaucht ist, wobei
1.6 in der Auffangwanne (5) wenigstens eine Ablauföffnung (6) mit einer Ablaufkante (6.1) angeordnet ist, welche oberhalb des Bodens (5.1) der Auffangwanne (5) mit einem vorgegebenen Abstand zum Boden (5.1) positioniert ist, und
1.7 das Gehäuse (3) soweit in die Auffangwanne (5) eingetaucht ist, dass es sich bis in einen Bereich unterhalb der Ablaufkante (6.1) erstreckt.

2. Hydrodynamische Kupplung gemäß Anspruch 1, **dadurch gekennzeichnet, dass** das Pumpenrad (1) einen Teil des Gehäuses (3) ausbildet.

3. Hydrodynamische Kupplung gemäß einem der Ansprüche 1 oder 2, **dadurch gekennzeichnet, dass** das Gehäuse (3) auf seiner Außenseite eine Beschaufelung (7) trägt.

4. Hydrodynamische Kupplung gemäß einem der Ansprüche 1 bis 3, **dadurch gekennzeichnet, dass** die Auffangwanne (5) unterhalb der Ablaufkante (6.1) frei von arbeitsmediumabführenden Öffnungen, insbesondere frei von jeglicher Öffnung, ist.

5. Hydrodynamische Kupplung gemäß einem der Ansprüche 1 bis 4, **dadurch gekennzeichnet, dass** die Auslassöffnungen (4) in Form von einer oder mehreren Bohrungen durch das Gehäuse (3) ausgeführt ist/sind, welche mit einem vorgegebenen Winkel (8) gegenüber der Radialrichtung (9) des Gehäuses (3) geneigt eingebracht ist/sind.

6. Hydrodynamische Kupplung gemäß Anspruch 5, **dadurch gekennzeichnet, dass** die wenigstens eine Bohrung, von radial innen nach außen gesehen, entgegengesetzt der Drehrichtung (10) des Gehäuses (3) gegenüber der Radialrichtung (9) geneigt ist.

7. Baugruppe, umfassend einen Fahrzeugantriebsmotor (12) und eine hydrodynamische Kupplung (11) gemäß einem der Ansprüche 1 bis 6, deren Pumpenrad (1) in einer Triebverbindung mit einer Abtriebswelle des Fahrzeugantriebsmotors (12) steht.

8. Baugruppe gemäß Anspruch 7, **dadurch gekennzeichnet, dass** die hydrodynamische Kupplung (11) an dem Fahrzeugantriebsmotor (12) angeschlossen oder angeflanscht ist, und die Ablaufkante (6.1) im Fahrzeugantriebsmotor (12) ausgebildet ist.

9. Baugruppe gemäß einem der Ansprüche 7 oder 8, **dadurch gekennzeichnet, dass** die Baugruppe einen Luftverdichter (16), insbesondere einen Hubkolben-Luftverdichter, umfasst, dessen Antriebswelle in einer Triebverbindung mit dem Turbinenrad (2) steht.

10. Verfahren zum Betreiben einer hydrodynamischen Kupplung (11) mit den Merkmalen 1.1 bis 1.5 von Anspruch 1, **dadurch gekennzeichnet, dass** der Zufluss und Abfluss von Arbeitsmedium in die Auffangwanne (5) derart eingestellt wird, dass das Gehäuse (3) wenigstens in vorbestimmten Betriebszuständen der Kupplung (11) in einem in der Auffangwanne (5) angesammelten Arbeitsmediumsumpf (13) eingetaucht ist.

11. Verfahren gemäß Anspruch 10, **dadurch gekennzeichnet, dass** die vorbestimmten Betriebszustände der Betrieb der Kupplung (11) mit einem Schlupf zwischen dem Pumpenrad (1) und dem Turbinenrad (2) von mehr als 50 Prozent sind.

12. Verfahren gemäß einem der Ansprüche 10 oder 11, **dadurch gekennzeichnet, dass** die Kupplung (11) gemäß einem der Ansprüche 3 bis 9 ausgeführt ist, und die Beschaufelung (7) auf der Außenseite des Gehäuses (3) ab einer vorgegebenen Drehzahl des Gehäuses (3) mehr Arbeitsmedium aus dem Arbeitsmediumsumpf (13) über die wenigstens eine Ablauföffnung (6) herausbefördert als Arbeitsmedium in den Arbeitsmediumsumpf (13) eingeleitet wird, so dass sich die Menge an Arbeitsmedium in dem Arbeitsmediumsumpf (13) derart vermindert, dass der Flüssigkeitsspiegel des Arbeitsmediumsumpfes (13) auf ein Niveau unterhalb des Gehäuses (3) absinkt.

13. Verfahren gemäß einem der Ansprüche 10 oder 11, **dadurch gekennzeichnet, dass** bei Unterschreiten eines vorgegeben Schlupfes zwischen dem Pumpenrad (1) und dem Turbinenrad (2) und/oder bei Überschreiten einer vorgegebenen Drehzahl des Pumpenrads (1) und/oder des Gehäuses (3) und/oder des Turbinenrads (2) der Flüssigkeitsspiegel des Arbeitsmediumsumpfes (13) in der Auffangwanne (5) durch Öffnen von wenigstens einer Ablauföffnung in der Auffangwanne (5) oder durch Abpumpen von Arbeitsmedium aus dem Arbeitsmediumsumpf (13) auf ein Niveau unterhalb des Gehäuses (3) abgesenkt wird.

## Claims

1. A hydrodynamic coupling;
1.1 with a pump wheel (1);
1.2 with a turbine wheel (2);
1.3 the pump wheel (1) and the turbine wheel (2) jointly form a working chamber which can be filled with working medium for transmitting torque from the pump wheel (1) to the turbine wheel (2);
1.4 with a housing (3) which comprises one or several outlet openings (4) for discharging working medium from the working chamber and the housing (3);
**characterized by** the following features:
1.5 a collecting pan (5) is provided beneath the housing (3) for collecting working medium emerging from the outlet openings (4), in which the housing (3) is immersed, with
1.6 at least one drainage opening (6) with a drainage edge (6.1) being arranged in the collecting pan (5), which drainage edge is positioned above the floor (5.1) of the collecting pan (5) with a predetermined distance to the floor (5.1), and
1.7 the housing (3) is immersed to such an extent in the collecting pan (5) that it extends up to a region beneath the drainage edge (6.1).

2. A hydrodynamic coupling according to claim 1, **characterized in that** the pump wheel (1) forms a part of the housing (3).

3. A hydrodynamic coupling according to one of the claims 1 or 2, **characterized in that** the housing (3) carries a blading (7) on its outside.

4. A hydrodynamic coupling according to one of the claims 1 to 3, **characterized in that** the collecting pan (5) beneath the drainage edge (6.1) is free from openings discharging the working medium, especially free from any opening.

5. A hydrodynamic coupling according to one of the claims 1 to 4, **characterized in that** the outlet openings (4) are arranged in the form of one or several bore holes through the housing (3) which are introduced inclined at a predetermined angle (8) relative to the radial direction (9) of the housing (3).

6. A hydrodynamic coupling according to claim 5, **characterized in that** the at least one bore hole is inclined opposite to the direction of rotation (10) of the housing (3) against the radial direction, as seen radially from the inside to the outside.

7. An assembly, comprising a vehicle driving motor (12) and a hydrodynamic coupling (11) according to one of the claims 1 to 6, whose pump wheel (1) is in driving connection with a driven shaft of the vehicle driving motor (12).

8. An assembly according to claim 7, **characterized in that** the hydrodynamic coupling (11) is connected to or flanged on the vehicle driving motor (12) and the drainage edge (6.1) is arranged in the vehicle driving motor (12).

9. An assembly according to one of the claims 7 or 8, **characterized in that** the assembly comprises an air compressor (16), especially a reciprocating air compressor, whose drive shaft is in driving connection with the turbine wheel (2).

10. A method for operating a hydrodynamic coupling (11), with the features 1.1 to 1.5 of claim 1, **characterized in that** the inlet and discharge of working medium to and from the collecting pan (5) is set in such a way that the housing (3) is immersed in a working medium sump (13) collected in the collecting pan (5) at least in predetermined operating states of the coupling (11).

11. A method according to claim 10, **characterized in that** the predetermined operating states are operation of the coupling (11) with a slippage between pump wheel (1) and turbine wheel (2) of more than 50 percent.

12. A method according to one of the claims 10 or 11, **characterized in that** the coupling (11) is arranged according to one of the claims 3 to 9, and the blading (7) on the outside of the housing (3) conveys more working medium from the working medium sump (13) via the at least one drainage opening (6) from a predetermined speed of the housing (3) than working medium is introduced into the working medium sump (13), so that the quantity of working medium in the working medium sump (13) decreases to such an extent that the fluid level of the working medium sump (13) decreases to a level beneath the housing (3).

13. A method according to one of the claims 10 or 11, **characterized in that** upon falling beneath a predetermined slippage between pump wheel (1) and turbine wheel (2) and/or upon exceeding a predetermined speed of the pump wheel (1) and/or the housing (3) and/or the turbine wheel (2) the fluid level of the working medium sump (13) in the collecting pan (5) is decreased to a level beneath the housing (3) by opening at least one drainage opening in the collecting pan (5) or by pumping off working medium from the working medium sump (13).

## Revendications

1. Accouplement hydrodynamique
1.1 avec une roue de pompe (1);
1.2 avec une roue de turbine (2) ;
1.3 la roue de pompe (1) et la roue de turbine (2) forment ensemble un espace de travail qui peut être rempli de fluide de travail pour transmettre un couple de rotation de la roue de pompe (1) à la roue de turbine (2) ;
1.4 avec un carter (3), qui présente une ou plusieurs ouvertures de sortie (4) pour l'évacuation du fluide de travail hors de l'espace de travail et du carter (3) ;
**caractérisé en ce que** :
1.5 il est prévu un bac collecteur (5) en dessous du carter (3) pour recueillir le fluide de travail sortant par les ouvertures de sortie (4), dans lequel le carter (3) est plongé,
dans lequel
1.6 le bac collecteur (5) comporte au moins une ouverture d'écoulement (6) avec un bord d'écoulement (6.1), qui est placée au-dessus du fond (5.1) du bac collecteur (5) à une distance prédéterminée du fond (5.1), et
1.7 le carter (3) est plongé dans le bac collecteur (5) suffisamment loin pour s'étendre dans une zone située en dessous du bord d'écoulement (6.1).

2. Accouplement hydrodynamique selon la revendication 1, **caractérisé en ce que** la roue de pompe (1) forme une partie du carter (3).

3. Accouplement hydrodynamique selon l'une des revendications 1 ou 2, **caractérisé en ce que** le carter (3) porte des aubes (7) sur sa face extérieure.

4. Accouplement hydrodynamique selon l'une des revendications 1 à 3, **caractérisé en ce que** le bac collecteur (5) ne présente pas d'ouvertures d'évacuation du fluide de travail en dessous du bord d'écoulement (6.1), et ne comporte en particulier aucune ouverture.

5. Accouplement hydrodynamique selon l'une des revendications 1 à 4, **caractérisé en ce que** les ouvertures de sortie (4) sont réalisées sous la forme d'un ou plusieurs alésages traversant le carter (3) qui sont inclinés selon un angle (8) prédéterminé par rapport à l'orientation radiale (9) du carter (3).

6. Accouplement hydrodynamique selon la revendication 5, **caractérisé en ce que** l'au moins un alésage est incliné, vu de l'intérieur vers l'extérieur dans le sens radial, à l'opposé du sens de rotation (10) du carter (3) par rapport à l'orientation radiale (9).

7. Groupe fonctionnel comprenant un moteur (12) pour la propulsion d'un véhicule et un accouplement hydrodynamique (11) selon l'une des revendications 1 à 6, dont la roue de pompe (1) est en liaison motrice avec un arbre de sortie du moteur (12) pour la propulsion d'un véhicule.

8. Groupe fonctionnel selon la revendication 7, **caractérisé en ce que** l'accouplement hydrodynamique (11) est raccordé ou fixé par une bride sur le moteur (12) pour la propulsion d'un véhicule et le bord d'écoulement (6.1) est formé dans le moteur (12) pour la propulsion d'un véhicule.

9. Groupe fonctionnel selon l'une des revendications 7 ou 8, **caractérisé en ce qu'**il comprend un compresseur d'air (16), en particulier un compresseur à piston, dont l'arbre d'entraînement est en liaison motrice avec la roue de turbine (2).

10. Procédé pour l'utilisation d'un accouplement hydrodynamique (11) présentant les caractéristiques 1.1 à 1.5 de la revendication 1, **caractérisé en ce que** l'arrivée et l'évacuation du fluide de travail dans le bac collecteur (5) sont régulés de telle manière que le carter (3) soit plongé, au moins dans des états de fonctionnement prédéterminés de l'accouplement (11), dans un réservoir de fluide de travail (13) accumulé dans le bac collecteur (5).

11. Procédé selon la revendication 10, **caractérisé en ce que** les états de fonctionnement prédéterminés sont les états de fonctionnement de l'accouplement (11) avec un patinage entre la roue de pompe (1) et la roue de turbine (2) de plus de 50 %.

12. Procédé selon l'une des revendications 10 ou 11, **caractérisé en ce que** l'accouplement (11) est réalisé selon les revendications 3 à 9 et les aubes (7) sur la face extérieure du carter (3) évacuent, à partir d'une vitesse de rotation prédéterminée de carter (3), plus de fluide de travail du réservoir de fluide de travail (13) via l'au moins une ouverture d'écoulement (6) que la quantité de fluide de travail amenée dans le réservoir de fluide de travail (13), de sorte que la quantité de fluide de travail dans le réservoir de fluide de travail (13) diminue au point que le niveau de liquide du réservoir de fluide de travail (13) baisse à un niveau situé en dessous du carter (3).

13. Procédé selon l'une des revendications 10 ou 11, **caractérisé en ce que** lorsqu'un patinage prédéterminé n'est pas atteint entre la roue de pompe (1) et la roue de turbine (2) et/ou lorsqu'une vitesse de rotation prédéterminée de la roue de pompe (1) et/ou du carter (3) et/ou de la roue de turbine (2) est dépassée, le niveau de liquide du réservoir de fluide de travail (13) dans le bac collecteur (5) est abaissé par l'ouverture d'au moins une ouverture d'écoulement dans le bac collecteur (5) ou par pompage de fluide de travail hors du réservoir de fluide de travail (13) jusqu'à un niveau situé en dessous du carter (3).
